# EUROPÄISCHE PATENTSCHRIFT

(11) **EP 2 173 991 B1**
(45) Veröffentlichungstag und Bekanntmachung des Hinweises auf die Patenterteilung: **07.11.2018**
(21) Anmeldenummer: 08760815.4
(22) Anmeldetag: 11.06.2008
(51) Int. Cl.: F02D 41/00, F02D 41/14, F02D 41/18

(54) **VERFAHREN UND VORRICHTUNG ZUM BETREIBEN EINER BRENNKRAFTMASCHINE**
METHOD AND APPARATUS FOR OPERATING AN INTERNAL COMBUSTION ENGINE
PROCÉDÉ ET DISPOSITIF DE FONCTIONNEMENT D'UN MOTEUR À COMBUSTION INTERNE

(30) Priorität: 26.07.2007 DE 102007035099
(43) Veröffentlichungstag der Anmeldung: 14.04.2010
(73) Patentinhaber: Robert Bosch GmbH, 70442 Stuttgart (DE)
(72) Erfinder: KOCH, Rolf-Dieter, 70193 Stuttgart (DE)
(86) Internationale Anmeldenummer: PCT/EP2008/057258
(87) Internationale Veröffentlichungsnummer: WO 2009/013060

(56) Entgegenhaltungen:
- EP-A- 0 976 922
- EP-A- 1 780 390
- DE-A1- 19 618 385
- US-A- 5 282 449

## Beschreibung

### Stand der Technik

Die Erfindung geht von einem Verfahren und von einer Vorrichtung zum Betreiben einer Brennkraftmaschine nach der Gattung der unabhängigen Ansprüche aus.

Aus der DE 196 18 385 A1 sind bereits ein Verfahren und eine Vorrichtung zur Steuerung einer Brennkraftmaschine bekannt, bei denen abhängig von einer Sollmomentenanforderung ein Sollluftmassenstrom in den Zylinder vorgegeben und dieser in einen Solleinstellwert für eine den Luftmassenstrom beeinflussende Stelleinrichtung umgerechnet wird.

In der EP 1 780 390 A1 wird eine Motorsteuerung und ein Steuerverfahren offenbart, bei dem ein Fahrerwunschmoment abhängig vom Betätigungsgrad eines Fahrpedals berechnet wird. Bei der Berechnung wird außerdem ein maximales Drehmoment berücksichtigt, das abhängig von der Motordrehzahl und dem aktuellen Luftvolumen berechnet wird. Grenzwerte und Ausgangsgrößen werden mit einem Vorhalt versehen.

### Vorteile der Erfindung

### Offenbarung der Erfindung

Das erfindungsgemäße Verfahren und die erfindungsgemäße Vorrichtung mit den Merkmalen der unabhängigen Ansprüche haben demgegenüber den Vorteil, dass ein aktueller Wert für den Luftmassenstrom ermittelt wird, dass aus dem aktuellen Wert für den Luftmassenstrom ein aktueller Grenzwert für die Ausgangsgröße der Brennkraftmaschine ermittelt wird und dass die Ausgangsgröße auf den aktuellen Grenzwert begrenzt wird. Auf diese Weise lässt sich der aktuelle Wert für den Luftmassenstrom dem Sollwert für den Luftmassenstrom insbesondere bei einer Änderung des Sollwertes für den Luftmassenstrom nachführen und gleichzeitig die Ausgangsgröße der Brennkraftmaschine auf einen dem aktuellen Wert für den Luftmassenstrom zugeordneten aktuellen Grenzwert begrenzen. Durch die Ermittlung des aktuellen Grenzwertes abhängig vom aktuellen Wert für den Luftmassenstrom lässt sich der aktuelle Grenzwert auch für einen Fettbetrieb der Brennkraftmaschine mit angefettetem Luft-/Kraftstoffgemischverhältnis auf einfache Weise ermitteln und umsetzen, ohne das der Fettbetrieb abgebrochen werden muss.

Der Grenzwert für die Ausgangsgröße oder der aktuelle Wert für den Luftmassenstrom wird mit einem Vorhalt beaufschlagt. Auf diese Weise wird ein Toleranzbereich für Schwankungen des aktuellen Wertes für den Luftmassenstrom bereitgestellt. Schwankungen des aktuellen Wertes für den Luftmassenstrom, die beispielsweise durch den Übergang vom Magerbetrieb in den Fettbetrieb oder umgekehrt bedingt sind oder unvermeidliche temporäre Abweichungen des aktuellen Luftmassenstroms vom Sollwert für den Luftmassenstrom in einem stationären Betrieb der Brennkraftmaschine führen dann noch nicht zu einer ungewollten Begrenzung der Ausgangsgröße in diesen Fällen.

Der Vorhalt wird abhängig von einer Dynamik eines aktuellen Betriebszustandes der Brennkraftmaschine gewählt. Auf diese Weise lässt sich der maximal zulässige Wertebereich für die Schwankungen des aktuellen Wertes für den Luftmassenstrom bzw. den daraus resultierenden Grenzwert für die Ausgangsgröße der Brennkraftmaschine besser an die aktuelle Betriebssituation der Brennkraftmaschine anpassen.

Der Vorhalt wird mit zunehmender Dynamik kleiner gewählt. Auf diese Weise lässt sich im Stationärbetrieb ein maximaler Vorhalt realisieren, der mit zunehmender Dynamik beim Betrieb der Brennkraftmaschine absinkt und gegen Null geht. Auf diese Weise wird zum einen eine ungewollte Begrenzung der Ausgangsgröße im Stationärbetrieb oder während der Übergänge vom Magerbetrieb in den Fettbetrieb und umgekehrt ausgeschlossen und andererseits sichergestellt, dass mit zunehmender Dynamik des Betriebs der Brennkraftmaschine eine unerwünschte starke Anfettung des Luft-/Kraftstoffgemischverhältnisses verhindert wird.

Durch die in den Unteransprüchen aufgeführten Maßnahmen sind vorteilhafte Weiterbildungen und Verbesserungen des im Hauptanspruch angegebenen Verfahrens möglich.

Besonders vorteilhaft ist es, wenn die Ausgangsgröße der Brennkraftmaschine durch Begrenzung der Kraftstoffzufuhr begrenzt wird und wenn der Luftmassenstrom dem Sollwert für den Luftmassenstrom ohne Begrenzung nachgeführt wird. Auf diese Weise wird zuverlässig eine unerwünscht starke Anfettung des Luft-/Kraftstoffgemischverhältnisses verhindert.

Vorteilhaft ist weiterhin, wenn der Sollwert für den Luftmassenstrom abhängig vom Sollwert für die Ausgangsgröße der Brennkraftmaschine und einer Drehzahl der Brennkraftmaschine mittels eines Kennfeldes ermittelt wird. Dies stellt eine besonders einfache Möglichkeit zur Ermittlung des Sollwertes für den Luftmassenstrom dar.

Dabei ist es von Vorteil, wenn der aktuelle Grenzwert für die Ausgangsgröße abhängig vom aktuellen Wert für den Luftmassenstrom und der Drehzahl der Brennkraftmaschine abhängig vom Kennfeld ermittelt wird. Auf diese Weise lässt sich nämlich das Kennfeld zur Ermittlung des Sollwertes für den Luftmassenstrom, welches abhängig ist vom Sollwert für die Ausgangsgröße der Brennkraftmaschine und der Drehzahl der Brennkraftmaschine in inverser Weise zur Ermittlung des aktuellen Grenzwertes für die Ausgangsgröße abhängig vom aktuellen Wert für den Luftmassenstrom und der Drehzahl der Brennkraftmaschine verwenden, so dass Aufwand, insbesondere Applikationsaufwand eingespart und das bereits zur Ermittlung des Sollwertes für den Luftmassenstrom verwendete Kennfeld auch zur Ermittlung des aktuellen Grenzwertes in inverser Weise verwendet werden kann.

Dabei ist es vorteilhaft, wenn das Kennfeld für einen stationären Betriebszustand der Brennkraftmaschine appliziert ist. Dies ermöglicht eine besonders einfache Applikation des Kennfeldes, die zudem sehr zuverlässig ist.

### Zeichnung

Ein Ausführungsbeispiel der Erfindung ist in der Zeichnung dargestellt und in der nachfolgenden Beschreibung näher erläutert. Es zeigen:
- Figur 1: eine schematische Ansicht einer Brennkraftmaschine,
- Figur 2: ein Funktionsdiagramm zur Erläuterung der erfindungsgemäßen Vorrichtung und des erfindungsgemäßen Verfahrens,
- Figur 3: einen Ablaufplan für einen beispielhaften Ablauf des erfindungsgemäßen Verfahrens und
- Figur 4: eine Kennlinie eines Vorhaltes abhängig von der Dynamik des Betriebs der Brennkraftmaschine.

### Beschreibung des Ausführungsbeispiels

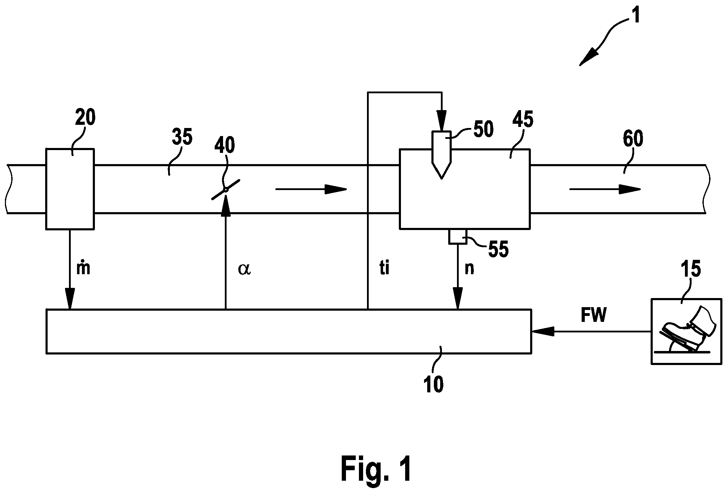

In Figur 1 kennzeichnet 1 eine Brennkraftmaschine, die beispielsweise als Ottomotor oder als Dieselmotor ausgebildet ist und die beispielsweise ein Fahrzeug antreibt. Dabei umfasst die Brennkraftmaschine 1 mindestens einen Brennraum 45, dem über eine Luftzufuhr 35 Luft zugeführt wird. In der Luftzufuhr 35 ist dabei eine zweite Ermittlungseinheit 20 zur Ermittlung des zugeführten aktuellen Luftmassenstroms *ṁ* angeordnet. Die zweite Ermittlungseinheit 20 kann dabei beispielsweise als Luftmassenmesser, beispielsweise als Heißfilmluftmassenmesser ausgebildet sein. Die zweite Ermittlungseinheit 20 liefert dann den Messwert für den aktuellen Luftmassenstrom *ṁ* an eine Motorsteuerung 10 weiter. In einer alternativen Ausführungsform kann der aktuelle Luftmassenstrom statt mittels eines Luftmassenmessers auch durch Modellierung aus anderen Betriebsgrößen der Brennkraftmaschine 1 in dem Fachmann bekannter Weise modelliert werden, beispielsweise in Abhängigkeit eines gemessenen Saugrohrdruckes oder in Abhängigkeit von Motordrehzahl und Öffnungsgrad einer Drosselklappe 40 in der Luftzufuhr 35. Die Strömungsrichtung der zugeführten Luft in der Luftzufuhr 35 ist in Figur 1 durch einen Pfeil gekennzeichnet. Stromab der zweiten Ermittlungseinheit 20 ist in der Luftzufuhr 35 die Drosselklappe 40 angeordnet, deren Öffnungsgrad α von der Motorsteuerung 10 in der nachfolgend beschriebenen Weise eingestellt wird. Über ein Einspritzventil 50 wird Kraftstoff in den Brennraum 45 eingespritzt, wobei als Maß für die eingespritzte Kraftstoffmenge eine Einspritzdauer ti verwendet wird. Diese wird ebenfalls von der Motorsteuerung 10 in der nachfolgend beschriebenen Weise vorgegeben. Im Bereich des Brennraums 45 erfasst ein Drehzahlsensor 55 die aktuelle Motordrehzahl n und leitet sie an die Motorsteuerung 10 zur weiteren Auswertung weiter. Das bei der Verbrennung des Luft-/Kraftstoffgemisches im Brennraum 45 entstehende Abgas wird in einen Abgasstrang 60 ausgestoßen, dessen Strömungsrichtung in Figur 1 ebenfalls durch einen Pfeil dargestellt ist. Ferner ist ein Fahrpedalmodul 15 vorgesehen, durch dessen Betätigung abhängig vom Betätigungsgrad der Fahrer des Fahrzeugs einen Fahrerwunsch FW für die Antriebsleistung oder das Antriebsdrehmoment des Fahrzeugs vorgibt. Dieser Fahrerwunsch FW wird ebenfalls an die Motorsteuerung 10 weitergeleitet. Im folgenden soll beispielhaft angenommen werden, dass es sich bei dem Fahrerwunsch FW um einen Fahrerwunsch für das Antriebsmoment des Fahrzeugs handelt, das in der Motorsteuerung 10 abhängig von Getriebe- und Wandlerübersetzung sowie von Motorverlusten und dem Zustand von Nebenaggregaten in dem Fachmann bekannter Weise in ein von der Brennkraftmaschine 1 abzugebendes Solldrehmoment Msoll umgerechnet wird. Dabei kann es ebenfalls in der vom Fachmann bekannten Weise vorgesehen sein, dass das vom Fahrerwunsch FW abgeleitete Sollmoment zusammen mit anderen Sollmomentanforderungen von weiteren Steuersystemen, wie beispielsweise einer Fahrdynamikregelung, einem Antiblockiersystem, einem Fahrgeschwindigkeitsregler und/oder einem Fahrstabilitätsprogramm, koordiniert wird zur Bildung eines resultierenden Sollmomentes. Im Folgenden soll der Einfachheit halber angenommen werden, dass das vom Fahrerwunsch FW abgeleitete Sollmoment Msoll gleich dem resultierenden Sollmoment ist.

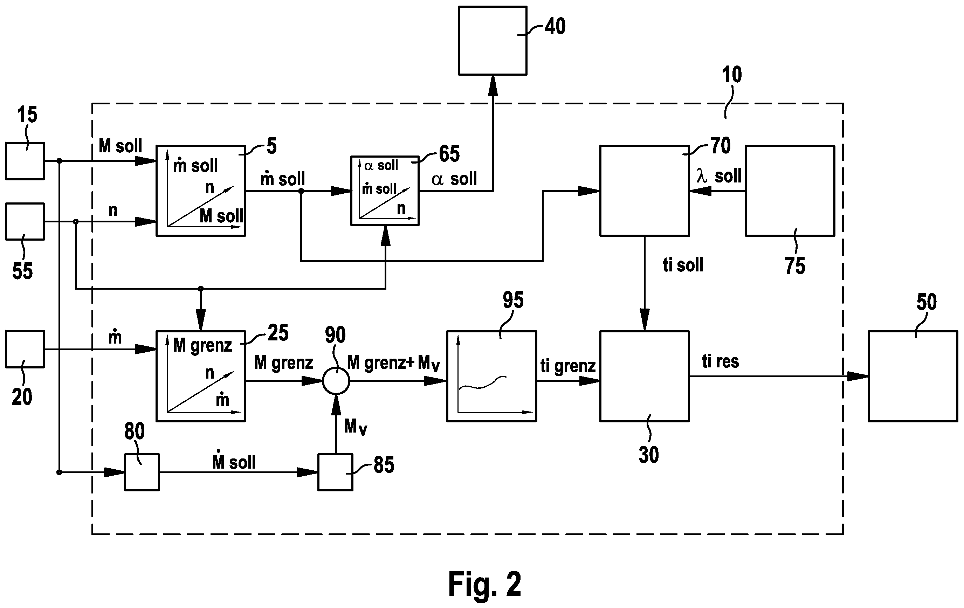

In Figur 2 ist ein Funktionsdiagramm der erfindungsgemäßen Vorrichtung dargestellt, wie es beispielsweise Software- und/oder hardwaremäßig in der Motorsteuerung 10 implementiert sein kann. Der Einfachheit halber wird angenommen, dass die erfindungsgemäße Vorrichtung der Motorsteuerung 10 entspricht, wobei in Figur 2 nur die für die Erfindung relevanten Module der Motorsteuerung 10 dargestellt sind. Die Vorrichtung 10 umfasst ein erstes Kennfeld 5, dem zum einen vom Drehzahlsensor 55 die aktuelle Motordrehzahl n und zum anderen das Sollmoment Msoll zugeführt ist, wobei der Einfachheit halber gemäß Figur 2 das Sollmoment Msoll vom Fahrpedalmodul 15 dem ersten Kennfeld 5 zugeführt wird. Tatsächlich und wie oben beschrieben liefert das Fahrpedalmodul 15 einen Sollwert für das Antriebsmoment, das dann abhängig von Getriebe und Wandlerübersetzung in der Vorrichtung 10 in das Sollmoment Msoll umgewandelt wird. Diese Umwandlung ist dem Fachmann bekannt und deshalb in Figur 2 nicht weiter ausgeführt. Das erste Kennfeld 5 ist beispielsweise auf einem Prüfstand und/oder in Fahrversuchen bei einem Stationärbetrieb der Brennkraftmaschine, d. h. einem Betriebszustand der Brennkraftmaschine mit jeweils konstanter Sollmomentenvorgabe appliziert. Die Ausgangsgröße des ersten Kennfeldes 5 ist dabei ein Sollwert für den Luftmassenstrom *ṁ* soll zur Brennkraftmaschine 1. Somit bildet das erste Kennfeld 5 das Sollmoment Msoll und die aktuelle Motordrehzahl n in den Sollwert *ṁ* soll für den Luftmassenstrom zur Brennkraftmaschine 1 ab. Der Sollwert *ṁ* soll für den Luftmassenstrom wird einem Regler 65 zusammen mit dem Messwert für den aktuellen Luftmassenstrom *ṁ* zugeführt. Der Regler 65 bildet die Differenz zwischen dem Sollwert *ṁ* soll und dem Messwert *ṁ* für den Luftmassenstrom und bildet abhängig von dieser Differenz einen Sollwert αsoll für die Position der Drosselklappe 40 derart, dass die genannte Differenz minimiert und der Messwert *ṁ* dem Sollwert *ṁ* soll nachgeführt wird. Die Position der Drosselklappe 40 wird dann von der Motorsteuerung 10 gemäß dem Sollwert αsoll für die Position der Drosselklappe am Ausgang des zweiten Kennfeldes 65 beispielsweise mittels einer Lageregelung in dem Fachmann bekannter Weise eingestellt.

Weiterhin wird der Sollwert *ṁ* soll für den Luftmassenstrom einer vierten Ermittlungseinheit 70 zugeführt, der außerdem von einer Vorgabeeinheit 75 ein Lambdasollwert λsoll für das Luft-/Kraftstoffgemischverhältnis zugeführt wird. Der Lambdasollwert λsoll wird dabei von der Vorgabeeinheit 75 abhängig vom aktuellen Betriebszustand der Brennkraftmaschine vorgegeben. So kann beispielsweise im normalen Fahrbetrieb von der Vorgabeeinheit 75 ein Lambdasollwert λsoll größer als Eins vorgegeben werden, um einen Magerbetrieb zu realisieren, der besonders kraftstoffsparend und emissionsreduzierend ist. Im normalen Fahrbetrieb kann jedoch auch wirkungsgradoptimal mit stöchiometrischem Luft-/Kraftstoffgemischverhältnis und damit einem Lambdasollwert λsoll gleich Eins durch entsprechende Vorgabe der Vorgabeeinheit 75 gefahren werden. Auch in Betriebsphasen starker Beschleunigung kann zur Stickoxidreduzierung ein stöchiometrisches Luft-/Kraftstoffgemischverhältnis mit λsoll gleich Eins vorgegeben werden. Eine Anfettung des Luft-/Kraftstoffgemischverhältnisses mit einem Sollwert λsoll kleiner als Eins wird von der Vorgabeeinheit 75 beispielsweise zur Regeneration eines in Figur 1 nicht dargestellten NOx-Speicher-Katalysators im Abgasstrang 60 der Brennkraftmaschine 1 beispielsweise in regelmäßigen Zeitabständen vorgegeben.

Die vierte Ermittlungseinheit 70 ermittelt abhängig vom Sollwert *ṁ* soll für den Luftmassenstrom und vom Lambdasollwert λsoll einen Sollwert für die einzuspritzende Kraftstoffmenge in Form eines Sollwertes tisoll für die Einspritzdauer. Der Sollwert tisoll für die Einspritzdauer wird dann an eine Begrenzungseinheit 30 weitergeleitet.

Die Vorrichtung 10 umfasst weiterhin ein drittes Kennfeld bzw. eine dritte Ermittlungseinheit 25, die letztlich der ersten Ermittlungseinheit 5 bzw. dem ersten Kennfeld 5 entspricht, jedoch mit vertauschten Eingangs- und Ausgangsgrößen. Das dritte Kennfeld 25 kann daher auch als eine Inverse des ersten Kennfeldes 5 bezeichnet werden, weil es eine Rückrechnung des von der zweiten Ermittlungseinheit 20 ermittelten aktuellen Luftmassenstroms *ṁ* und der aktuellen Motordrehzahl n als Eingangsgrößen in ein Grenzmoment Mgrenz als Ausgangsgröße des dritten Kennfeldes 25 beschreibt. Mit der Applikation des ersten Kennfeldes 5 ist auch das dritte Kennfeld 25 festgelegt und muss daher nicht eigens appliziert werden.

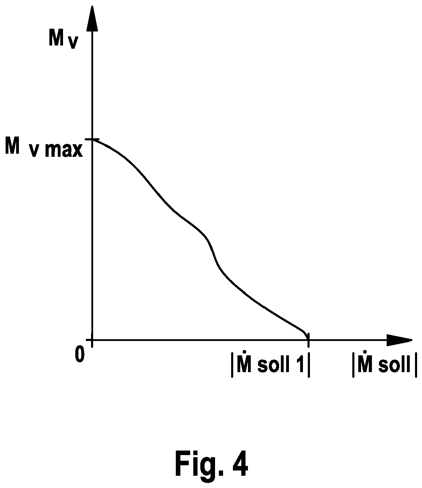

Optional kann die Vorrichtung 10 wie in Figur 2 gezeigt einen Gradientenbildner 80 umfassen, dem das Sollmoment Msoll zugeführt ist und der den zeitlichen Gradienten *Ṁsoll* des Sollmoments Msoll bildet und an eine erste Kennlinie 85 weiterleitet. Die erste Kennlinie 85 der Vorrichtung 10 bildet dann abhängig vom zeitlichen Gradienten *Ṁsoll* des Sollmomentes einen Vorhalt in Form eines Vorhaltmomentes Mᵥ und leitet ihn an ein Additionsglied 90 weiter, dem auch das Grenzmoment Mgrenz zugeführt ist. Ein Beispiel für die erste Kennlinie 85 ist in Figur 4 dargestellt, in der das Vorhaltmoment Mv über den Betrag des zeitlichen Gradienten *Ṁsoll* aufgetragen ist. Ist der zeitliche Gradient *Ṁsoll* gleich Null, dann liegt ein stationärer Betriebszustand der Brennkraftmaschine vor, beispielsweise weil der Betätigungsgrad des Fahrpedals konstant ist. Mit zunehmendem Betrag des zeitlichen Gradienten *Ṁsoll* nimmt auch die Dynamik des Betriebs der Brennkraftmaschine zu, beispielsweise in dem durch Niederdrücken des Fahrpedals eine Erhöhung des Sollmoments Msoll und damit eine Beschleunigung des Fahrzeugs und durch Loslassen des Fahrpedals eine Absenkung des Motorsollmoments Msoll und damit eine Verzögerung des Fahrzeugs realisiert werden soll. Im stationären Betriebszustand bei einem Betrag des zeitlichen Gradienten *Ṁsoll* gleich Null gibt die erste Kennlinie 85 dabei einen maximalen Momentenvorhalt Mᵥₘₐₓ vor. Mit zunehmender Dynamik des Betriebs der Brennkraftmaschine und damit mit zunehmendem Betrag des zeitlichen Gradienten *Ṁsoll* nimmt dann der Momentenvorhalt Mᵥ der ersten Kennlinie 85 beispielsweise gemäß dem Verlauf nach Figur 4 ab, bis er beim Betrag eines ersten zeitlichen Gradienten *Ṁsoll*1 des Sollmoments den Wert Null erreicht und für Beträge des zeitlichen Gradienten *Ṁsoll* größer dem Betrag des ersten zeitlichen Gradienten *Ṁsoll*1 dann auf dem Wert Null verbleibt. Somit ist für Beträge des zeitlichen Gradienten des Sollmomentes *Ṁsoll* größer oder gleich dem Betrag des ersten zeitlichen Gradienten *Ṁsoll*1 des Sollmoments der Momentenvorhalt M_{V} gleich Null. Dabei kann die erste Kennlinie 4 beispielsweise auf einem Prüfstand und/oder in Fahrversuchen derart geeignet appliziert werden, dass zum einen für Schwankungen des aktuellen Luftmassenstroms *ṁ* beispielsweise aufgrund eines Umschaltens vom Magerbetrieb in den Fettbetrieb oder umgekehrt oder bei unvermeidlichen temporären Abweichungen des aktuellen Luftmassenstroms *ṁ* vom Sollwert *ṁsoll* für den Luftmassenstrom besonders im stationären Betriebszustand keine unerwünschte Begrenzung eingeleitet wird. Zum anderen sollte durch die erste Kennlinie 85 gemäß dem Beispiel nach Figur 4 sichergestellt sein, dass eine unerwünscht starke Anfettung des Luft-/Kraftstoffgemisches speziell mit zunehmender Dynamik des Betriebs der Brennkraftmaschine vermieden wird.

Am Ausgang des Additionsgliedes 90 liegt als resultierendes Grenzmoment Mgrenzres die Summe Mgrenzres = Mgrenz + M_{V} an. Das resultierende Grenzmoment Mgrenzres = Mgrenz + M_{V} wird dann als Eingangsgröße einer zweiten Kennlinie 95 zugeführt, die das resultierende Grenzmoment Mgrenzres in einen Grenzwert tigrenz für die Einspritzdauer, alternativ in einen Grenzwert für die Einspritzmenge abbildet. Auch die zweite Kennlinie 95 kann beispielsweise auf einem Prüfstand und/oder in Fahrversuchen appliziert werden. Die zweite Kennlinie 95 ordnet dabei jedem resultierenden Grenzmoment Mgrenzres denjenigen Grenzwert für die Einspritzmenge bzw. die Einspritzdauer tigrenz zu, die zur Einhaltung des resultierenden Grenzmomentes Mgrenzres nicht überschritten werden darf. Im Folgenden wird beispielhaft die Einspritzzeit betrachtet, wobei alternativ in analoger Weise auch die Einspritzmenge verwendet werden kann, statt der Einspritzdauer bzw. -zeit. Der Grenzwert tigrenz für die Einspritzzeit wird ebenfalls der Begrenzungseinheit 30 zugeführt. Für den Fall, dass der Momentenvorhalt M_{V} nicht gebildet wird, sind der Gradientenbildner 80, die erste Kennlinie 85 und das Additionsglied 90 nicht erforderlich und das resultierende Grenzmoment Mgrenzres entspricht dem Grenzmoment Mgrenz am Ausgang der dritten Kennlinie 25.

Die Begrenzungseinheit 30 führt eine Minimalwertauswahl durch und gibt an ihrem Ausgang den kleineren der Werte tisoll und tigrenz als resultierende Einspritzdauer tires ab. Die resultierende Einspritzdauer tires kann dabei als einzelne Einspritzung realisiert werden oder beispielsweise auch in mehrere Teileinspritzungen aufgeteilt werden. Das Einspritzventil 50 wird dann zur Einspritzung mit der Einspritzdauer tires angesteuert. Die Ermittlung des Grenzwertes tigrenz für die Einspritzdauer ist für den Fettbetrieb der Brennkraftmaschine 1 mit einem Lambdawert kleiner Eins problemlos möglich, so dass die Begrenzung des von der Brennkraftmaschine 1 abgegebenen Drehmoments, das auch als inneres Moment bezeichnet wird, auf den resultierenden Momentengrenzwert Mgrenzres durch den Grenzwert tigrenz für die Einspritzdauer in jedem Betriebszustand der Brennkraftmaschine 1 und damit auch beim Fettbetrieb gewährleistet ist, ohne dass der Fettbetrieb in einem dynamischen Betriebszustand von vornherein abgebrochen werden müsste.

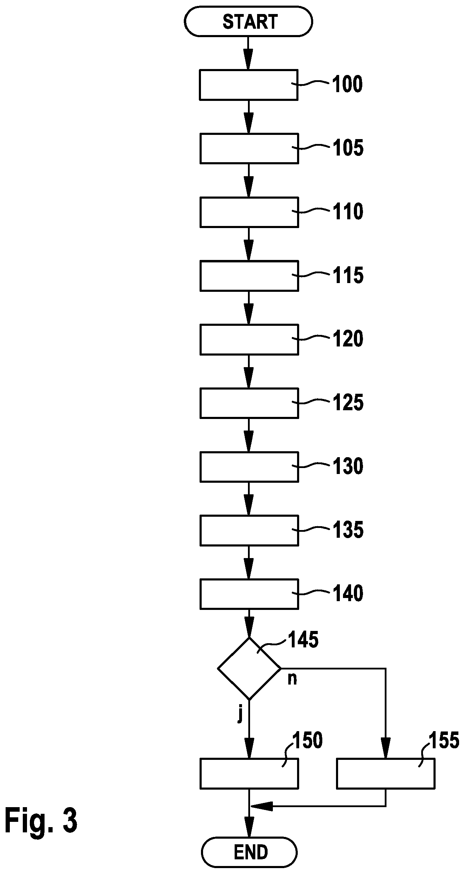

In Figur 3 ist anhand eines Ablaufplans ein beispielhafter Ablauf des erfindungsgemäßen Verfahrens dargestellt. Nach dem Start des Programms werden bei einem Programmpunkt 100 von der Vorrichtung 10 der Fahrerwunsch FW bzw. das Sollmoment Msoll, die aktuelle Motordrehzahl n und der Lambdasollwert λsoll eingelesen. Anschließend wird zu einem Programmpunkt 105 verzweigt. Bei Programmpunkt 105 wird mit Hilfe des ersten Kennfeldes 5 aus dem Sollmomentenwert Msoll und der aktuellen Drehzahl n der Sollwert *ṁsoll* für den Luftmassenstrom ermittelt. Anschließend wird zu einem Programmpunkt 110 verzweigt.

Bei Programmpunkt 110 wird mit Hilfe des zweiten Kennfeldes 65 der Sollwert αsoll für die Position der Drosselklappe 40 ermittelt. Außerdem wird bei Programmpunkt 110 von der vierten Ermittlungseinheit 70 in der beschriebenen Weise der Sollwert tisoll für die Einspritzdauer abhängig vom Sollwert *ṁsoll* für den Luftmassenstrom und vom Lambdasollwert λsoll ermittelt. Anschließend wird zu einem Programmpunkt 115 verzweigt.

Bei Programmpunkt 115 wird der aktuelle Luftmassenstrom *ṁ* von der ersten Ermittlungseinheit 20 eingelesen. Anschließend wird zu einem Programmpunkt 120 verzweigt.

Bei Programmpunkt 120 wird mit Hilfe des dritten Kennfeldes 25 in der beschriebenen Weise aus dem aktuellen Luftmassenstrom *ṁ* und der aktuellen Motordrehzahl n das Grenzmoment Mgrenz ermittelt. Anschließend wird zu einem Programmpunkt 125 verzweigt.

Bei Programmpunkt 125 ermittelt der Gradientenbildner 80 den aktuellen Wert *Ṁsoll* des zeitlichen Gradienten des Sollmomentes. Anschließend wird zu einem Programmpunkt 130 verzweigt.

Bei Programmpunkt 130 wird aus dem aktuellen zeitlichen Gradienten *Ṁsoll* mit Hilfe der ersten Kennlinie 85 der Momentenvorhalt M_{V} gebildet. Anschließend wird zu einem Programmpunkt 135 verzweigt.

Bei Programmpunkt 135 wird das resultierende Grenzmoment Mgrenzres als Summe aus Grenzmoment Mgrenz und Vorhaltmoment M_{V} berechnet. Anschließend wird zu einem Programmpunkt 140 verzweigt.

Bei Programmpunkt 140 wird mit Hilfe der zweiten Kennlinie 95 aus dem resultierenden Grenzmoment Mgrenzres in der beschriebenen Weise der Grenzwert tigrenz für die Einspritzdauer ermittelt. Anschließend wird zu einem Programmpunkt 145 verzweigt.

Bei Programmpunkt 145 prüft die Begrenzungseinheit 30, ob der Sollwert tisoll für die Einspritzdauer größer als der Grenzwert tigrenz für die Einspritzdauer ist. Ist dies der Fall, so wird zu einem Programmpunkt 150 verzweigt, andernfalls wird zu einem Programmpunkt 155 verzweigt.

Bei Programmpunkt 150 wird als resultierende Einspritzdauer tires der Grenzwert tigrenz für die Einspritzdauer gewählt. Anschließend wird das Programm verlassen.

Bei Programmpunkt 155 wird für den resultierenden Wert tires für die Einspritzdauer der Sollwert tisoll für die Einspritzdauer gewählt. Anschließend wird das Programm verlassen.

Das Programm wird in einem vorgegebenen Rechenraster und somit in regelmäßigen Abständen wiederholt durchlaufen, wobei das Rechenraster beispielsweise durch die Abtastzeitpunkte zur Ermittlung des aktuellen Luftmassenstroms *ṁ* bzw. der aktuellen Motordrehzahl n bzw. des aktuellen Fahrerwunsches FW bzw. des aktuellen Sollmoments Msoll vorgegeben sind.

Gemäß einer weiteren Alternative kann statt der Beaufschlagung des Grenzmomentes Mgrenz mit dem Vorhaltmoment M_{V} im Additionsglied 90 alternativ der aktuelle Luftmassenstrom *ṁ* am Eingang des dritten Kennfeldes 25 über ein Additionsglied mit einem Vorhalt *ṁv* für den Luftmassenstrom beaufschlagt werden. In diesem Fall bildet die erste Kennlinie 85 den zeitlichen Gradienten *Ṁsoll* des Sollmomentes in den entsprechenden Vorhalt *ṁv* für den Luftmassenstrom ab, wobei diese Abbildung in analoger Weise zur in Figur 4 beschriebenen ersten Kennlinie 85 erfolgt. Das bedeutet, dass mit zunehmendem Betrag des zeitlichen Gradienten *Ṁsoll* der Vorhalt *ṁv* für den Luftmassenstrom ausgehend von einem Maximalwert für den Betrag des zeitlichen Gradienten *Ṁsoll* gleich Null bis zum Erreichen des Wertes Null für den Betrag des ersten Wertes *Ṁsoll*1 für das Sollmoment absinkt.

In obigem Beispiel wurde als Ausgangsgröße der Brennkraftmaschine das Drehmoment gewählt. In einer alternativen Ausführungsform kann auch eine andere Ausgangsgröße der Brennkraftmaschine gewählt werden, beispielsweise die Kraftstoffmenge bzw. die Einspritzdauer selbst. In diesem Fall kann die zweite Kennlinie 95 entfallen, da dann das dritte Kennfeld 25 bereits den Grenzwert bzw. das Additionsglied 90 den resultierenden Grenzwert für die Einspritzdauer liefert. Gemäß der Darstellung nach Figur 2 muss ansonsten die Ausgangsgröße Drehmoment in Einspritzdauer geändert werden. Dies gilt dann auch für die Darstellung in Figur 4 sowie die Beschreibung des Ablaufplans nach Figur 3. Dabei kann der Programmschritt 140 analog zur zweiten Kennlinie 95 entfallen.

Die Nachführung des aktuellen Luftmassenstroms *ṁ* an den Sollwert *ṁ* soll für den Luftmassenstrom erfolgt ohne Begrenzung und mit größtmöglicher Dynamik. In einem solchermaßen kraftstoffmengengeführten System wird dann abhängig vom Fahrerwunsch FW statt des Sollmomentes Msoll bereits die Solleinspritzdauer tisoll vorgegeben, die dann mit Hilfe des Lambdasollwertes λsoll direkt in den Sollwert *ṁsoll* für den Luftmassenstrom umgewandelt werden kann, so dass es des ersten Kennfeldes 5 nicht bedarf und die vierte Ermittlungseinheit 70 aus dem Lambdasollwert λsoll und dem Sollwert tisoll für die Einspritzdauer in einer zur Figur 1 inversen Funktionsweise den Sollwert *ṁsoll* für den Luftmassenstrom ermittelt und dem zweiten Kennfeld 65 zuführt. Da der Sollwert tisoll für die Einspritzdauer bei dieser Alternative nicht von der vierten Ermittlungseinheit 70 ermittelt werden muss, wird er direkt der Begrenzungseinheit 30 zugeführt.

Der Vorteil des momentengeführten Systems nach Figur 2 gegenüber dem kraftstoffmengengeführten System liegt darin, dass das Sollmoment Msoll bei gleichem Fahrerwunsch FW gleichbleibt und zwar auch dann, wenn die Betriebsart der Brennkraftmaschine wechselt, beispielsweise vom Magerbetrieb in den Fettbetrieb oder umgekehrt. Der Sollwert für die Einspritzmenge ändert sich in diesem Fall.

Wird bei der alternativen Ausführungsform der Vorhalt nicht dem aktuellen Luftmassenstrom *ṁ* überlagert, sondern dem Grenzwert tigrenz am Ausgang des dritten Kennfeldes 25, so ist für den dann erforderlichen Vorhalt ti_{V} für die Einspritzdauer eine andere Ermittlung als in den Figuren 2 und 4 dargestellt erforderlich, wenn das Sollmoment Msoll nicht zur Verfügung steht. Der zeitliche Gradient des Sollwertes tisoll für die Einspritzdauer kann dabei nicht anstelle des zeitlichen Gradienten *Ṁsoll* für das Sollmoment verwendet werden, da sich eine zeitliche Änderung des Sollwertes tisoll für die Einspritzdauer auch bei einem Betriebsartenwechsel vom Magerbetrieb zum Fettbetrieb oder umgekehrt ergeben kann, ohne dass ein dynamischer Betrieb der Brennkraftmaschine vorliegt. In diesem Fall kann statt des zeitlichen Gradienten *Ṁsoll* jedoch der zeitliche Gradient *ḞW* des vom Fahrpedalmodul 15 empfangenen Signals für den Fahrerwunsch FW verwendet werden, so dass auf der Abszisse statt des Betrages des zeitlichen Gradienten *Ṁsoll* des Sollmomentes der Betrages des zeitlichen Gradienten *ḞW* des Fahrerwunsches aufgetragen wird, wohingegen die Ordinate dann einen Vorhalt ti_{V} für die Einspritzdauer zeigt, der von einem Maximalwert ti_{Vmax} für einen Betrag des zeitlichen Gradienten *ḞW* des Fahrerwunsches gleich Null bis auf den Wert Null absinkt, wenn der Betrag des zeitlichen Gradienten *ḞW* des Fahrerwunsches einen ersten Wert erreicht entsprechend dem Betrag des ersten Wertes *Ṁsoll*1 für das Sollmoment in Figur 4. Am Ausgang des Additionsgliedes 90 liegt dann als resultierender Grenzwert tigrenzres die Summe aus tigrenz am Ausgang des dritten Kennfeldes 25 und ti_{V} am Ausgang der ersten Kennlinie 85. Statt tigrenz wird dann tigrenzres der Begrenzungseinheit 30 zugeführt. Im kraftstoffmengengeführten System wird aus dem Fahrerwunsch FW, also dem Betätigungsgrad des Fahrpedals anstelle eines Sollmomentes der Brennkraftmaschine 1 direkt eine Solleinspritzmenge tisoll in dem Fachmann bekannter Weise ermittelt.

Das für den dynamischen Betriebszustand mittels des dritten Kennfeldes 25 ermittelte Grenzmoment Mgrenz aus dem aktuellen Luftmassenstrom *ṁ* und der aktuellen Motordrehzahl n entspricht dem Istdrehmoment des stationären Betriebszustandes der Brennkraftmaschine 1 bei entsprechenden Werten für den aktuellen Luftmassenstrom *ṁ* und die Motordrehzahl n.

Durch das erfindungsgemäße Verfahren und die erfindungsgemäße Vorrichtung wird ein von den Emissionen und dem Fahr- und Geräuschverhalten her optimierter Fettbetrieb der Brennkraftmaschine auch bei großer Dynamik bzw. starker Beschleunigung des Fahrzeugs ermöglicht, wie es beispielsweise in dynamischen Emissionszyklen vorkommt, die für die Emissionszertifizierung der Brennkraftmaschine zugrunde gelegt werden können.

Da als Eingangsgrößen des dritten Kennfeldes 25 der aktuelle Luftmassenstrom *ṁ* und die aktuelle Motordrehzahl n vorgesehen sind, handelt es sich bei dem Grenzmoment Mgrenz am Ausgang des dritten Kennfeldes 25 ebenfalls um ein entsprechend aktuelles Grenzmoment Mgrenz, das sich mit dem Luftmassenstrom und der Motordrehzahl ändert.

## Patentansprüche

1. Verfahren zum Betreiben einer Brennkraftmaschine (1), bei dem ein Sollwert für eine Ausgangsgröße der Brennkraftmaschine (1), insbesondere ein Drehmoment oder eine Kraftstoffmenge, vorgegeben wird und abhängig vom Sollwert für die Ausgangsgröße ein Sollwert für einen Luftmassenstrom zur Brennkraftmaschine (1) ermittelt und durch Ansteuerung mindestens eines Stellgliedes (40) umgesetzt wird, wobei ein aktueller Wert für den Luftmassenstrom ermittelt wird, dass aus dem aktuellen Wert für den Luftmassenstrom ein aktueller Grenzwert für die Ausgangsgröße der Brennkraftmaschine (1) ermittelt wird und dass die Ausgangsgröße auf den aktuellen Grenzwert begrenzt wird, wobei der Grenzwert für die Ausgangsgröße mit einem Vorhalt beaufschlagt oder der aktuelle Wert für den Luftmassenstrom mit einem Vorhalt beaufschlagt wird, wobei der Vorhalt abhängig von einer Dynamik eines aktuellen Betriebszustandes der Brennkraftmaschine (1) gewählt wird, **dadurch gekennzeichnet dass** der Vorhalt mit zunehmender Dynamik kleiner gewählt wird.

2. Verfahren nach Anspruch 1, **dadurch gekennzeichnet, dass** die Ausgangsgröße der Brennkraftmaschine (1) durch Begrenzung der Kraftstoffzufuhr begrenzt wird und dass der Luftmassenstrom dem Sollwert für den Luftmassenstrom ohne Begrenzung nachgeführt wird.

3. Verfahren nach Anspruch 1 oder 2, **dadurch gekennzeichnet, dass** der Sollwert für den Luftmassenstrom abhängig vom Sollwert für die Ausgangsgröße der Brennkraftmaschine (1) und einer Drehzahl der Brennkraftmaschine (1) mittels eines Kennfeldes (5) ermittelt wird.

4. Verfahren nach Anspruch 3, **dadurch gekennzeichnet, dass** der aktuelle Grenzwert für die Ausgangsgröße abhängig vom aktuellen Wert für den Luftmassenstrom und der Drehzahl der Brennkraftmaschine (1) abhängig vom Kennfeld (5) ermittelt wird.

5. Verfahren nach Anspruch 3 oder 4, **dadurch gekennzeichnet, dass** das Kennfeld (5) für einen stationären Betriebszustand der Brennkraftmaschine (1) appliziert ist.

6. Vorrichtung (10) zum Betreiben einer Brennkraftmaschine (1), mit Vorgabemitteln (15), die einen Sollwert für eine Ausgangsgröße der Brennkraftmaschine (1), insbesondere ein Drehmoment oder eine Kraftstoffmenge, vorgeben und mit ersten Ermittlungsmitteln (5), die abhängig vom Sollwert für die Ausgangsgröße einen Sollwert für einen Luftmassenstrom zur Brennkraftmaschine (1) ermitteln und mit Umsetzmitteln (65) zur Umsetzung des Sollwertes für den Luftmassenstrom durch Ansteuerung mindestens eines Stellgliedes (40), dass zweite Ermittlungsmittel (20) vorgesehen sind, die einen aktuellen Wert für den Luftmassenstrom ermitteln, dass dritte Ermittlungsmittel (25) vorgesehen sind, die aus dem aktuellen Wert für den Luftmassenstrom einen aktuellen Grenzwert für die Ausgangsgröße der Brennkraftmaschine (1) ermitteln und dass Begrenzungsmittel (30) vorgesehen sind, die die Ausgangsgröße auf den aktuellen Grenzwert begrenzen, wobei der Grenzwert für die Ausgangsgröße mit einem Vorhalt beaufschlagt oder der aktuelle Wert für den Luftmassenstrom mit einem Vorhalt beaufschlagt wird, wobei der Vorhalt abhängig von einer Dynamik eines aktuellen Betriebszustandes der Brennkraftmaschine (1) gewählt wird, **dadurch gekennzeichnet dass** der Vorhalt mit zunehmender Dynamik kleiner gewählt wird.

## Claims

1. Method for operating an internal combustion engine (1), in which a target value for an output variable of the internal combustion engine (1), in particular a torque or a quantity of fuel, is predefined, and a target value for an air mass flow to the internal combustion engine (1) is determined as a function of the target value for the output variable and is implemented by actuating at least one actuator element (40), wherein a current value for the air mass flow is determined, in that a current limiting value for the output variable of the internal combustion engine (1) is determined from the current value for the air mass flow, and in that the output variable is limited to the current limiting value, wherein a bias is applied to the limiting value for the output variable or a bias is applied to the current value for the air mass flow, wherein the bias is selected as a function of the dynamics of a current operating state of the internal combustion engine (1), **characterized in that** the smaller selection is made for the bias as the dynamics increase.

2. Method according to Claim 1, **characterized in that** the output variable of the internal combustion engine (1) is limited by limiting the fuel supply, and **in that** the air mass flow is made to track the target value for the air mass flow without limitation.

3. Method according to Claim 1 or 2, **characterized in that** the target value for the air mass flow is determined as a function of the target value for the output variable of the internal combustion engine (1) and a rotational speed of the internal combustion engine (1) by means of a characteristic diagram (5).

4. Method according to Claim 3, **characterized in that** the current limiting value for the output variable is determined as a function of the current value for the air mass flow and the rotational speed of the internal combustion engine (1) as a function of the characteristic diagram (5).

5. Method according to Claim 3 or 4, **characterized in that** the characteristic diagram (5) is applied to a steady operating state of the internal combustion engine (1).

6. Device (10) for operating an internal combustion engine (1), with predefining means (15) which predefine a target value for an output variable of the internal combustion engine (1), in particular a torque or a quantity of fuel, and with first determining means (5) which determine a target value for an air mass flow to the internal combustion engine (1) as a function of the target value for the output variable, and with implementation means (65) for implementing the target value for the air mass flow by actuating at least one actuator element (40), in that second determining means (20) are provided which determine a current value for the air mass flow, in that third determining means (25) are provided which determine the current limiting value for the output variable of the internal combustion engine (1) from the current value for the air mass flow, and in that the limiting means (30) are provided which limit the output variable to the current limiting value, wherein a bias is applied to the limiting value for the output variable, or a bias is applied to the current value for the air mass flow, wherein the bias is selected as a function of the dynamics of a current operating state of the internal combustion engine (1), **characterized in that** the smaller selection is made for the bias as the dynamics increase.

## Revendications

1. Procédé pour faire fonctionner un moteur à combustion interne (1), selon lequel une valeur de consigne est prédéfinie pour une grandeur de sortie du moteur à combustion interne (1), notamment un couple ou une quantité de carburant, et une valeur de consigne pour un débit massique d'air vers le moteur à combustion interne (1) est déterminée en fonction de la valeur de consigne pour la grandeur de sortie, puis mise en application en commandant au moins un actionneur (40), une valeur actuelle du débit massique d'air étant déterminée, une valeur limite actuelle pour la grandeur de sortie du moteur à combustion interne (1) étant déterminée à partir de la valeur actuelle du débit massique d'air et la grandeur de sortie étant limitée à la valeur limite actuelle, une réserve étant appliquée à la valeur limite pour la grandeur de sortie ou une réserve étant appliquée à la valeur actuelle du débit massique d'air, la réserve étant sélectionnée en fonction d'une dynamique d'un état de fonctionnement actuel du moteur à combustion interne (1), **caractérisé en ce que** la réserve est sélectionnée plus petite à mesure que la dynamique augmente.

2. Procédé selon la revendication 1, **caractérisé en ce que** la grandeur de sortie du moteur à combustion interne (1) est limitée en limitant l'arrivée de carburant et **en ce que** le débit massique d'air est asservi sans limitation à la valeur de consigne du débit massique d'air.

3. Procédé selon la revendication 1 ou 2, **caractérisé en ce que** la valeur de consigne du débit massique d'air est déterminée au moyen d'un diagramme caractéristique (5) en fonction de la valeur de consigne pour la grandeur de sortie du moteur à combustion interne (1) et d'une vitesse de rotation du moteur à combustion interne (1).

4. Procédé selon la revendication 3, **caractérisé en ce que** la valeur limite actuelle pour la grandeur de sortie étant détermine en fonction de la valeur actuelle du débit massique d'air et la vitesse de rotation du moteur à combustion interne (1) en fonction du diagramme caractéristique (5).

5. Procédé selon la revendication 3 ou 4, **caractérisé en ce que** le diagramme caractéristique (5) est appliqué pour un état de fonctionnement stationnaire du moteur à combustion interne (1).

6. Dispositif (10) pour faire fonctionner un moteur à combustion interne (1), comprenant des moyens de prédéfinition (15) qui prédéfinissent une valeur de consigne pour une grandeur de sortie du moteur à combustion interne (1), notamment un couple ou une quantité de carburant, et comprenant des premiers moyens de détermination (5) qui déterminent une valeur de consigne pour un débit massique d'air vers le moteur à combustion interne (1) en fonction de la valeur de consigne pour la grandeur de sortie, et comprenant des moyens de mise en application (65) destinée à mettre en application la valeur de consigne du débit massique d'air en commandant au moins un actionneur (40), des deuxièmes moyens de détermination (20) étant présents, lesquels déterminent une valeur actuelle du débit massique d'air, des troisièmes moyens de détermination (25) étant présents, lesquels déterminent une valeur limite actuelle pour la grandeur de sortie du moteur à combustion interne (1) étant déterminée à partir de la valeur actuelle du débit massique d'air et des moyens de limitation (30) étant présents, lesquels limitent la grandeur de sortie à la valeur limite actuelle, une réserve étant appliquée à la valeur limite pour la grandeur de sortie ou une réserve étant appliquée à la valeur actuelle du débit massique d'air, la réserve étant sélectionnée en fonction d'une dynamique d'un état de fonctionnement actuel du moteur à combustion interne (1), **caractérisé en ce que** la réserve est sélectionnée plus petite à mesure que la dynamique augmente.
